# EUROPÄISCHE PATENTSCHRIFT

(11) **EP 0 453 392 B1**
(45) Veröffentlichungstag und Bekanntmachung des Hinweises auf die Patenterteilung: **30.11.1994**
(21) Anmeldenummer: 91710009.1
(22) Anmeldetag: 20.03.1991
(51) Int. Cl.: H02G 3/04

(54) **Versorgungskanal für elektrische Energie**
Electrical power feed channel
Canal d'alimentation en énergie électrique

(30) Priorität: 19.04.1990 DE 4012442
(43) Veröffentlichungstag der Anmeldung: 23.10.1991
(73) Patentinhaber: Hermann Kleinhuis GmbH. & Co. KG, D-58507 Lüdenscheid (DE)
(72) Erfinder: Böing, Manfred, W-5880 Lüdenscheid (DE); Kleinkorres, Uwe, W-5880 Lüdenscheid (DE)
(74) Vertreter: Hassler, Werner, Dr.

(56) Entgegenhaltungen:
- EP-A- 0 113 981
- CH-A- 535 882

## Beschreibung

Die Erfindung betrifft einen Versorgungskanal für elektrische Energie, wobei der Versorgungskanal aus Längsprofilteilen zusammengefügt ist.

Ein derartiger Versorgungskanal ist als Brüstungskanal, als Sockelleistenkanal, als Bodenkanal, als Versorgungsleiste, als Versorgungssäule oder in anderer Ausführung bekannt. Der Versorgungskanal besteht aus Längsprofilteilen, die zusammenfügbar sind.

Solche Versorgungskanäle sind aus den Dokumenten EP-A- 0 113 981 oder CH-A- 535 882 bekannt.

Aufgabe der Erfindung ist eine derartige Ausbildung eines Versorgungskanals, daß derselbe universell einsetzbar ist und die Montage und Installation der Versorgungseinrichtung erleichtert.

Diese Aufgabe wird nach der Erfindung dadurch gelöst, daß zwei gleiche Halbprofile an der jeweils ersten Stoßkante eine Zunge mit einer Kreisrinne auf der Innenseite und an der jeweils zweiten Stoßkante ein Gabelprofil mit einem äußeren Gabelschenkel als Anschlag für die Zungenstirnkante und einem inneren Gabelschenkel, der mit einem Walzenprofil in die Kreisrinne eingreift, vorgesehen sind.

Die Erfindung unterscheidet sich insofern vom Stand der Technik, als der Versorgungskanal aus zwei genau gleichen Halbprofilen besteht. Dieses bedeutet einerseits eine Vereinfachung in der Herstellung, weil der Versorgungskanal aus einem einzigen Halbprofil aufgebaut werden kann. Außerdem ist der Versorgungskanal in Bezug auf die beiden Halbprofile symmetrisch und kann somit in unterschiedlichen Ausrichtungen eingesetzt werden. Schließlich sichert die Verbindung der Stoßkanten der Halbprofile eine gelenkartige oder scharnierartige Kopplung der Halbprofile an einer Stoßkante, so daß die Halbprofile ineinander eingehängt und um diese Gelenkachse scharnierartig aufgeklappt werden können. Man kann in aufgeklapptem Zustand die Montage und Installation der Anschlußgeräte vornehmen. Die Anschlußgeräte können mit den Versorgungsleitungen verbunden werden. Nach Abschluß der Installation werden die beiden Halbprofile zusammengeklappt. Damit ist der Versorgungskanal fertig montiert. Das eine Halbprofil kann vor der Installation bereits fest an irgendwelchen Trägern oder sonstigen Aufnahmeteilen montiert werden.

Eine genaue Stoßverbindung wird dadurch erzielt, daß der äußere Gabelschenkel einen Quersteg als Anschlag für die Zungenstirnkante aufweist.

Die Klappmöglichkeit wird zweckmäßig dadurch verwirklicht, daß der innere Gabelschenkel winkelförmig ausgebildet ist und daß der Endsteg des Gabelschenkels eine Länge aufweist, die größer als die Länge der Zunge von der Kreisrinne bis zur Zungenstirnkante ist.

Eine vorteilhafte Montagemöglichkeit wird dadurch verwirklicht, daß die beiden Halbprofile um das Walzenprofil über einen Winkel von etwa 90° gegeneienander verschwenkbar sind.

Eine symmetrische Trennung des Versorgungskanals wird dadurch verwirklicht, daß jedes Halbprofil einen U-förmigen Querschnitt mit einem Mittelsteg und daran sitzenden etwa gleich langen Schenkeln hat.

Die Anbringung von Durchbrüchen wird dadurch ermöglicht, daß auf der Innenseite des Mittelstegs eine in Längsrichtung des Halbprofils verlaufende Bohrrille vorgesehen ist.

Die Sicherung und Festlegeung von Installattionsgeräten erfolgt dadurch, daß im Kantenbereich des Mittelstegs jeweils Auflageleisten vorgesehen sind, denen an den Schenkeln sitzende Haltezungen gegenüberstehen.

Eine montagemäßig günstige Verrastung wird dadurch erzielt, daß mindestens eine Haltezunge im wesentlichen parallel zu einem Schenkel verläuft und senkrecht zur Schenkelebene nachgiebig ausgebildet ist.

Eine in Längsrichtung und nach gegenüberliegenden Seiten beliebige Unterbringung der Installationsgeräte wird dadurch ermöglicht, daß in dem Mittelsteg jedes Halbprofils Durchbrechungen zur Aufnahme von Installationsgeräten anbringbar sind.

Eine stabile Leitungsführung wird dadurch ermöglicht, daß ein Leitungsbügel mit mehreren Leitungsklemmen vorgesehen ist, dessen Breite etwa der inneren Abmessung des Mittelstegs entspricht und der klemmend hinter den Zungen verrastbar ist.

Eine Anwendung ist dadurch gegeben, daß der Versorgungskanal als Versorgungsleiste ausgebildet ist.

Eine andere Anwendung erhält man dadurch, daß der Versorgungskanal als Versorgungssäule ausgebildet ist.

Eine erweiterte Anwendung und Anpassung der Versorgungssäule an die Umgebung erzielt man dadurch, daß die Versorgungssäule um ihre Längsachse drehbar angeordnet ist.

Eine sichere Abstützung der Versorgungssäule für die Drehung erzielt man dadurch, daß ein kalottenförmiger Ansatz des Fußes in eine Lagerpfanne eingreift. Der Ansatz kann eine Kugelkalottenfläche oder eine Kegelkalottenfläche als Lagerfläche aufweisen.

Eine selbsttätige Anpassung der Versorgungssäule an die jeweilige Einbauhöhe wird dadurch sichergestellt, daß innerhalb des Fußes eine in Längsrichtung der Versorgungssäule wirksame Druckfeder angeordnet ist.

Ausführungsbeispiele der Erfindung werden in der folgenden Beschreibung unter Bezugnahme auf die anliegenden Zeichnungen erläutert, in denen darstellen:
- Fig. 1: eine vergrößerte Einzelansicht eines Halbprofils,
- Fig. 2: einen Kabelkanal aus zwei Halbprofilen mit einer eingebauten Steckdose,
- Fig. 3: einen entsprechenden Kabelkanal mit einem eingebauten Leitungsbügel,
- Fig. 4: eine Darstellung der Funktion des Ineinanderschwenkens der Halbprofile,
- Fig. 5: eine Versorgungsleiste in perspektivischer Darstellung mit angedeuteten eingebauten Steckdosen,
- Fig. 6: einen Schnitt durch die Versorgungsleiste nach Fig. 5,
- Fig. 7: eine Versorgungssäule in perspektivischer Darstellung,
- Fig. 8: eine Einzelansicht des Fußendes der Versorgungssäule und
- Fig. 9: einen Schnitt durch den Fuß.

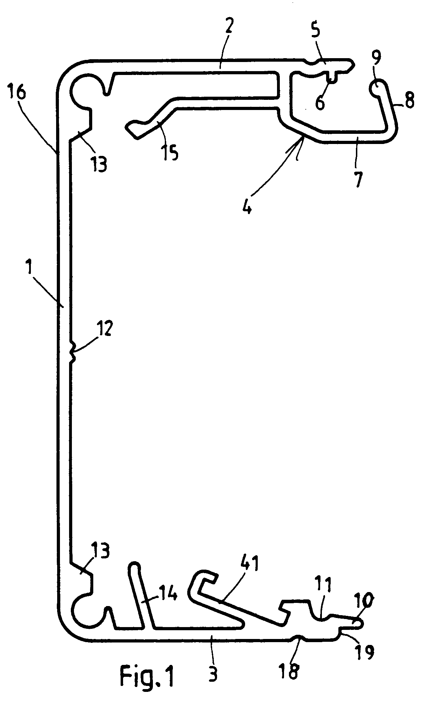

Fig. 1 zeigt in vergrößerter Einzelansicht ein Halbprofil 16 des Versorgungskanals. Das Halbprofil 16 hat einen im wesentlichen U-förmigen Querschnitt mit einem Mittelsteg 1 und jeweils rechtwinklig daran anschließenden, etwa gleich langen Schenkeln 2 und 3. An der Stirnseite des Schenkels 2 ist ein Gabelprofil 4 vorgesehen. Dieses Gabelprofil 4 hat einen äußeren Gabelschenkel 5 mit einem als Anschlag dienenden, nach innen gerichteten Quersteg 6. Der innere Gabelschenkel 7 ist winkelförmig ausgebildet. Der Endsteg 8 verläuft etwa senkrecht zur Ebene des Schenkels 2 und endet in ein Walzenprofil 9.

An dem Schenkel 3 sitzt eine Zunge 10 mit einer Stufe 19 und einer Sicherungsrille 18 auf der Außenseite. Auf der Innenseite der Zunge 10 ist eine Kreisrinne 11 eingeformt. Außerdem ist eine Potentialausgleichschiene 41 zur Aufnahme von Potentialausgleichklemmen vorgesehen.

An der Innenseite des Mittelstegs 1 verläuft in Längsrichtung des Halbprofils mittig eine Bohrrille 12, die den Ansatz einer Bohrlehre oder eines Bohrers ermöglicht. Im Kantenbereich des Mittelstegs sind Auflageleisten 13 vorgesehen, denen Zungen 14 und 15 gegenüberstehen. Eine Zunge 15 verläuft etwa parallel zur Ebene des Schenkels 2 und hat eine vergleichsweise große Länge, so daß diese Zunge 15 eine Nachgiebigkeit senkrecht zur Ebene des Schenkels 2 aufweist.

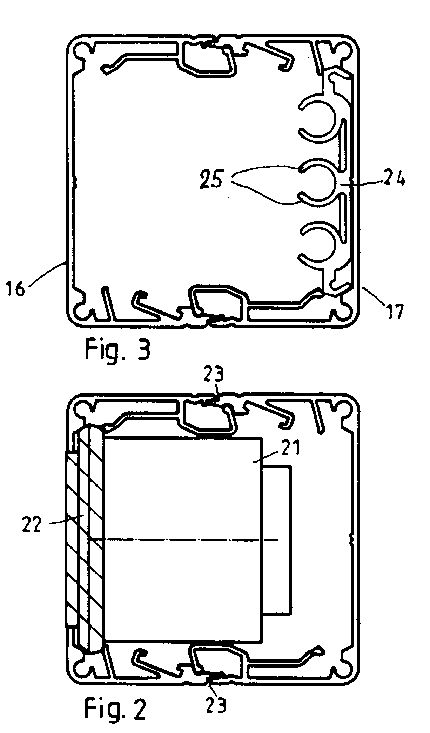

Jeweils zwei gleiche Halbprofile 16 und 17 lassen sich zusammenfügen, wobei jeweils die Schenkel 2 und 3 der Halbprofile 16 und 17 einander gegenüberstehen und paarig zueinander passen. Die Fig. 2 und 3 zeigen die Halbprofile 16 und 17 in zusammengefügtem Zustand. Die Walzenprofile 9 liegen jeweils in den Kreisrinnen 11 und die Zungen 10 wirken mit dem äußeren Gabelschenkel 5 zusammen und liegen an dem Quersteg 6 an. Die Halbprofile 16 und 17 stoßen mit Trennfugen 23 zusammen.

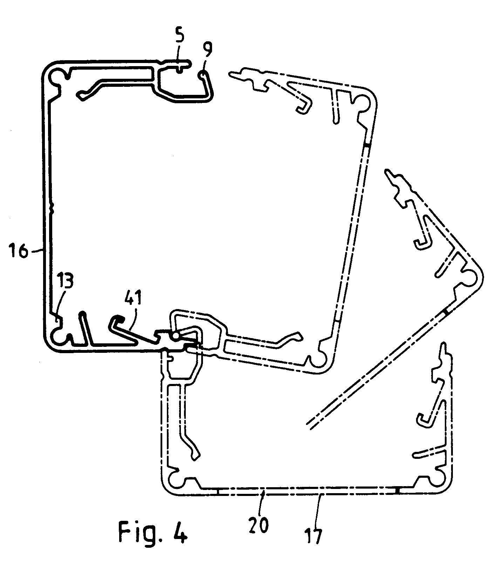

Das Walzenprofil 9 ermöglicht ein Aufklappen der beiden Halbprofile 16 und 17. Dieses ist in Einzelheiten in Fig. 4 dargestellt. Dort ist das Halbprofil 17 in strichpunktierten Linien in der unteren Stellung um einen Winkel von etwa 90° vollständig abgeklappt. Das Walzenprofil 9 wirkt in Verbindung mit der Kreisrinne 11 als Walzengelenk. Das Halbprofil 17 kann soweit abgeklappt werden, bis die Stirnkante des äußeren Gabelschenkels 5 in die Sicherungsrille 18 eintritt und dadurch die Klappbewegung begrenzt. Damit diese Klapp- oder Schwenkbewegung möglich ist, muß die Kreisrinne 11 gegenüber der Stufe 19 ausreichend gegen den Mittelsteg 1 zurückgesetzt sein. Außerdem muß die Länge des Endstegs 8 größer sein als die Länge der Zunge 10.

Diese Klappbewegung erleichtert die Anwendung und die Montage des Versorgungskanals. Das Halbprofil 16 kann an einem Träger, an einer Wand oder dergleichen befestigt werden. In dem Halbprofil 17 kann man Installationsgeräte wie Steckdosen, Antennendosen, Schalter, Sicherungsgeräte oder dergleichen unterbringen. Zu diesem Zweck wird mit Hilfe der Bohrrille 12 jeweils ein kreisförmiger Durchbruch 20 gebohrt. In diesen Durchbruch 20 wird ein Installationsgerät 21 eingesetzt. Das Installationsgerät hat einen Stirnkragen 22, der auf den Auflageleisten 13 aufliegt. Die Zungen 14 und 15 halten das Installationsgerät 21 rastend fest. Nach Einbau der Installationsgeräte und nach Anschluß und Verbindung der Kabel in dem aufgeklappten Zustand der beiden Halbprofile gemäß Fig. 4 kann man das Halbprofil 17 hochklappen, wie dies in Fig. 4 durch die Zwischenstellungen dargestellt ist. Schließlich rastet das Walzengelenk 9 des Halbprofils 16 in die Kreisrinne 11 des Haldprofils 17 ein. Damit sind die beiden Halbprofile rastend zusammengefügt, so daß der Versorgungskanal geschlossen ist. Ein ungewolltes Öffnen des Kabelkanals ist nicht möglich. Jedoch kann man den Kabelkanal jederzeit wieder öffnen, indem in die Trennfuge 23 ein Spreizwerkzeug eingesetzt wird, z. B. die Klinge eines Schraubendrehers. Dadurch löst man die genannte Rastung und kann das Halbprofil 17 um das Walzengelenk wieder um 90° abklappen.

Fig. 3 zeigt einen Leitungsbügel 24, der ebenfalls zwischen den Auflageleisten und den Zungen 14 und 15 verklemmt wird. Der Leitungsbügel 24 hat mehrere Leitungsklemmen 25 für Verbindungsleitungen.

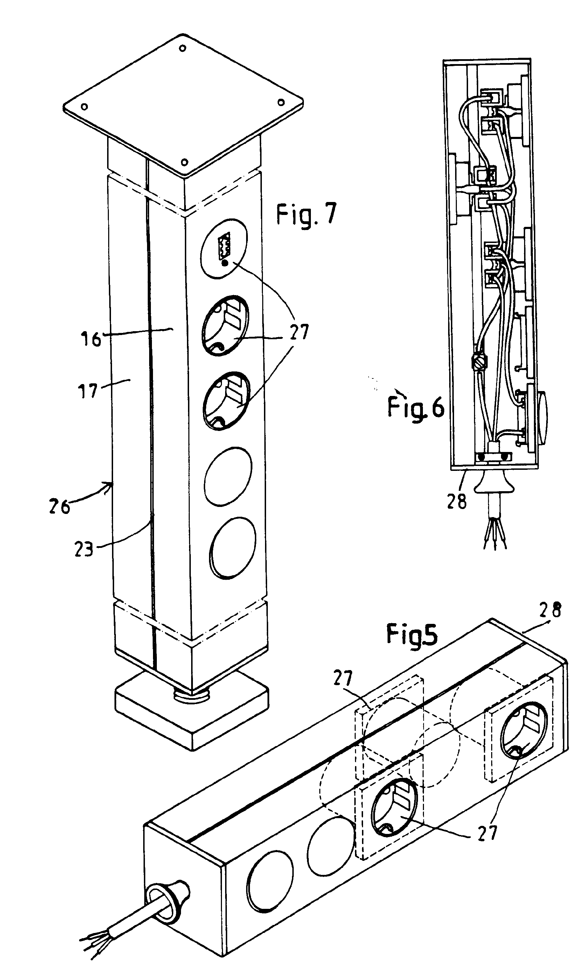

Die Fig. 5 und 6 zeigen eine Ausbildung des Versorgungskanals als Versorgungsleiste 28. Man erkennt hier besonders deutlich die beidseitige Bestückung mit Installationsgeräten 27. Die Installationsgeräte sind gemäß Fig. 6 innerhalb der Versorgungsleiste 28 verkabelt und an die Versorgungsleitungen angeschlossen. Diese Montage kann in aufgeklapptem Zustand des Versorgungskanals erfolgen. Der Versorgungskanal wird dann zusammengeklappt.

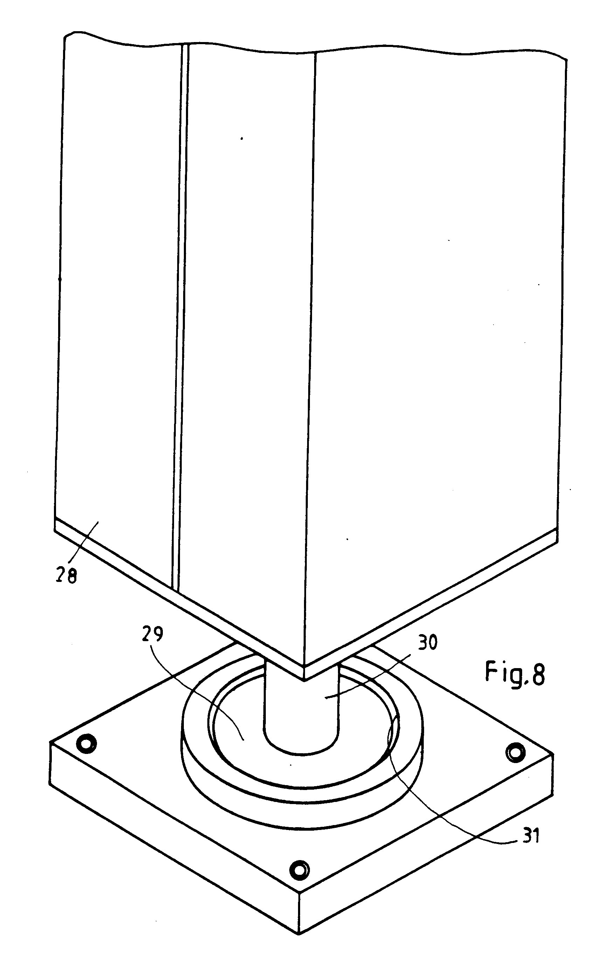

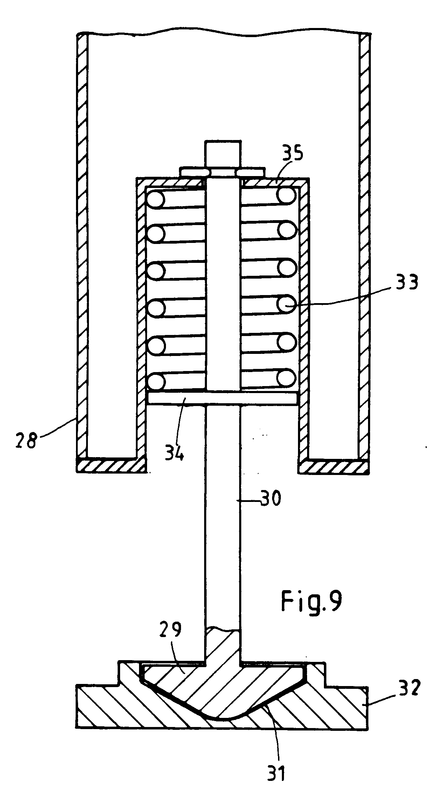

Die Fig. 7 bis 9 zeigen eine Ausbildung des Versorgungskanals als Versorgungssäule 26. Die Versorgungssäule 26 sitzt mit einem kugelkalottenförmigen oder kegelkalottenförmigen Ansatz 29 eines Fußes 30 in einer Lagerpfanne 31 eines Tragteils 32. Am Kopfende der Versorgungssäule ist eine ähnliche Lagerung gegenüber der Raumdecke vorgesehen, was im Einzelnen nicht dargestellt ist. Nach Fig. 9 ist zwischen einer auf dem Fuß 30 sitzenden Platte 34 und einer Gegenplatte 35 der Versorgungssäule 26 eine Druckfeder 33 eingespannt. die in Längsrichtung der Versorgungssäule 26 wirksam ist. Damit erreicht man, daß die Versorgungssäule einerseits in die jeweilige Anschlußrichtung drehbar ist. Die Versorgungssäule ist so in weiterem Umfang an die Bauverhältnisse anpassungsfähig. Andererseits erfolgt ein Längenausgleich innerhalb der Versorgungssäule, wodurch Einbauungenauigkeiten behoben werden können.

Man erkennt in der Versorgungssäule verschiedene Installationsgeäte 27 unterschiedlicher Art. Man erkennt auch die Trennfuge 23 der beiden Halbprofile. Die Installationsgeräte 27 können in beiden Halbprofilen und damit auf beiden Seiten der Trennfuge 23 vorgesehen sein.

## Patentansprüche

1. Versorgungskanal für elektrische Energie, wobei der Versorgungskanal aus Längsprofilteilen zusammengefügt ist, dadurch gekennzeichnet, daß zwei gleiche Halbprofile (16, 17) an der jeweils ersten Stoßkante eine Zunge (10) mit einer Kreisrinne (11) auf der Innenseite und an der jeweils zweiten Stoßkante ein Gabelprofil (4) mit einem äußeren Gabelschenkel (5) als Anschlag für die Zungenstirnkante und einem inneren Gabelschenkel (7), der mit einem Walzenprofil (9) in die Kreisrinne (11) eingreift, aufweisen.

2. Versorgungskanal nach Anspruch 1, dadurch gekennzeichnet, daß der äußere Gabelschenkel (5) einen Quersteg (6) als Anschlag für die Zungenstirnkante aufweist.

3. Versorgungskanal nach Anspruch 1 oder 2, dadurch gekennzeichnet, daß der innere Gabelschenkel (4) winkelförmig ausgebildet ist und daß der Endsteg (8) des inneren Gabelschenkels (4) eine Länge aufweist, die größer als die Länge der Zunge (10) von der Kreisrinne (11) bis zur Zungenstirnkante ist.

4. Versorgungskanal nach Anspruch 3, dadurch gekennzeichnet, daß die beiden Halbprofile (16, 17) um das Walzenprofil (9) über einen Winkel von etwa 90° gegeneienander verschwenkbar sind.

5. Versorgungskanal nach einem der Ansprüche 1 bis 4, dadurch gekennzeichnet, daß jedes Halbprofil (16, 17) eine U-förmigen Querschnitt mit einem Mittelsteg (1) und daran sitzenden etwa gleich langen Schenkeln (2, 3) hat.

6. Versorgungskanal nach Anspruch 5, dadurch gekennzeichnet, daß auf der Innenseite des Mittelstegs (1) eine in Längsrichtung des Halbprofils (16) verlaufende Bohrrille (12) vorgesehen ist.

7. Versorgungskanal nach Anspruch 5 oder 6, dadurch gekennzeichnet, daß im Kantenbereich des Mittelstegs (1) jeweils Auflageleisten (13) vorgesehen sind, denen an den Schenkeln (2. 3) sitzende Haltezungen (14, 15) gegenüberstehen.

8. Versorgungskanal nach Anspruch 7, dadurch gekennzeichnet, daß mindestens eine Haltezunge (15) im wesentlichen parallel zu einem Schenkel (2) verläuft und senkrecht zur Schenkelebene nachgiebig ausgebildet ist.

9. Versorgungskanal nach einem der Ansprüche 1 bis 7, dadurch gekennzeichnet, daß in dem Mittelsteg jedes Halbprofils Durchbrüche (20) zur Aufnahme von Installationsgeräten (21) anbringbar sind.

10. Versorgungskanal nach einem der Ansprüche 7 bis 9, dadurch gekennzeichnet, daß ein Leitungsbügel (24) mit mehreren Leitungsklemmen vorgesehen ist, dessen Breite etwa der inneren Abmessung des Mittelstegs entspricht und der klemmend hinter den Zungen (14, 15) verrastbar ist.

11. Versorgungskanal nach einem der Ansprüche 1 bis 10, dadurch gekennzeichnet, daß der Versorgungskanal als Versorgungsleiste (28) ausgebildet ist.

12. Versorgungskanal nach einem der Ansprüche 1 bis 10, dadurch gekennzeichnet, daß der Versorgungskanal als Versorgungssäule (26) ausgebildet ist.

13. Versorgungskanal nach Anspruch 12, dadurch gekennzeichnet, daß die Versorgungssäule (26) um ihre Längsachse drehbar angeordnet ist.

14. Versorgungskanal nach Anspruch 13, dadurch gekennzeichnet, daß ein kalottenförmiger Ansatz (29) des Fußes (30) in eine Lagerpfanne (31) eingreift.

15. Versorgungskanal nach einem der Ansprüche 12 bis 14, dadurch gekennzeichnet, daß innerhalb des Fußes (30) eine in Längsrichtung der Versorgungssäule (26) wirksame Druckfeder (33) angeordnet ist.

## Claims

1. Supply channel for electrical power, the supply channel being joined together from longitudinal profile parts, characterized in that two like half profiles (16, 17) have on the respectively first abutment edge a tab (10) having a circular channel (11) on the inside and have on the respectively second abutment edge a forked profile (4) having an outer fork prong (5) as the stop for the tab end edge, and an inner fork prong (7) which engages in the circular channel (11) by means of a cylinder profile (9).

2. Supply channel according to Claim 1, characterized in that the outer fork prong (5) has a transverse web (6) as the stop for the tab end edge.

3. Supply channel according to Claim 1 or 2, characterized in that the inner fork prong (4) is constructed angularly, and in that the end web (8) of the inner fork prong (4) is of a length which is greater than the length of the tab (10) from the circular channel (11) to the tab end edge.

4. Supply channel according to Claim 3, characterized in that the two half profiles (16, 17) are pivotal with respect to one another about the cylinder profile (9) over an angle of approximately 90°.

5. Supply channel according to one of Claims 1 to 4, characterized in that each half profile (16, 17) has a U-shaped cross-section, having a central web (1) and, seated thereon, limbs (2, 3) of approximately the same length.

6. Supply channel according to Claim 5, characterized in that a drilled channel (12) running in the longitudinal direction of the half profile (16) is provided on the inside of the central web (1).

7. Supply channel according to Claim 5 or 6, characterized in that there are provided in the edge region of the central web (1) in each case support ledges (13) opposite which are holding tabs (14, 15) seated on the limbs (2, 3).

8. Supply channel according to Claim 7, characterized in that at least one holding tab (15) runs substantially parallel to a limb (2) and is constructed to be yielding perpendicular to the plane of the limb.

9. Supply channel according to one of Claims 1 to 7, characterized in that apertures (20) for receiving installation devices (21) can be made in the central web of each half profile.

10. Supply channel according to one of Claims 7 to 9, characterized in that a line bracket (24) having a plurality of line clips is provided, the width of this line bracket corresponding approximately to the internal dimension of the central web and the line bracket being latchable in clamping manner behind the tabs (14, 15).

11. Supply channel according to one of Claims 1 to 10, characterized in that the supply channel is constructed as a supply strip (28).

12. Supply channel according to one of Claims 1 to 10, characterized in that the supply channel is constructed as a supply column (26).

13. Supply channel according to Claim 12, characterized in that the supply column (26) is arranged to be rotatable about its longitudinal axis.

14. Supply channel according to Claim 13, characterized in that a dome-shaped attachment (29) of the foot (30) engages in a step bearing (31).

15. Supply channel according to one of Claims 12 to 14, characterized in that a pressure spring (33) acting in the longitudinal direction of the supply column (26) is arranged within the foot (30).

## Revendications

1. Canal d'alimentation en énergie électrique, dans lequel le canal d'alimentation est composé de pièces profilées longitudinales, caractérisé en ce que deux demi-profilés (16, 17) identiques présentent, sur le respectivement premier bord, une languette (10) pourvue d'une rainure circulaire (11) sur la face interne et, sur le respectivement deuxième bord, un profil de fourche (4) comportant un fourchon extérieur (5) comme butée pour le bord frontal de languette et un fourchon intérieur (7) qui, avec un profil cylindrique (9), pénètre dans la rainure circulaire (11).

2. Canal d'alimentation suivant la revendication 1, caractérisé en ce que le fourchon extérieur (5) présente une nervure transversale (6) comme butée pour le bord frontal de languette.

3. Canal d'alimentation suivant l'une des revendications 1 et 2, caractérisé en ce que le fourchon intérieur (4) est réalisé sous une forme angulaire et en ce que l'aile terminale (8) du fourchon intérieur (4) présente une longueur qui est plus grande que ne l'est la longueur de la languette (10) depuis la rainure circulaire (11) jusqu'au bord frontal de languette.

4. Canal d'alimentation suivant la revendication 3, caractérisé en ce que les deux demi-profilés (16, 17) sont capables de pivoter l'un par rapport à l'autre d'un angle d'environ 90° autour du profil cylindrique (9).

5. Canal d'alimentation suivant l'une des revendications 1 à 4, caractérisé en ce que chaque demi-profilé (16, 17) a une section transversale en forme de U présentant une âme centrale (1) et de longues ailes approximativement identiques (2, 3) qui sont disposées sur cette âme.

6. Canal d'alimentation suivant la revendication 5, caractérisé en ce qu'un sillon de forage (12), qui s'étend dans la direction longitudinale du demi-profilé (16), est prévu sur la face interne de l'âme centrale (1).

7. Canal d'alimentation suivant l'une des revendications 5 et 6, caractérisé en ce que, dans la zone d'arête de l'âme centrale (1), sont prévues des nervures d'appui (13) auxquelles font face des pattes de retenue (14, 15) prévues sur les ailes (2, 3).

8. Canal d'alimentation suivant la revendication 7, caractérisé en ce qu'au moins une patte de retenue (15) s'étend sensiblement parallèlement à une aile (2) et est façonnée de manière à pouvoir fléchir perpendiculairement au plan de l'aile.

9. Canal d'alimentation suivant l'une des revendications 1 à 7, caractérisé en ce que des passages (20) destinés à recevoir des appareils d'installation (21) peuvent être adaptés dans l'âme centrale de chaque demi-profilé.

10. Canal d'alimentation suivant l'une des revendications 7 à 9, caractérisé en ce qu'un arceau de guidage (24) comportant plusieurs pinces de guidage est prévu, sa largeur correspondant approximativement à la dimension interne de l'âme centrale, cet arceau pouvant être encliqueté de manière pincée derrière les pattes (14, 15).

11. Canal d'alimentation suivant l'une des revendications 1 à 10, caractérisé en ce que le canal d'alimentation est réalisé sous la forme d'une bordure d'alimentation (28).

12. Canal d'alimentation suivant l'une des revendications 1 à 10, caractérisé en ce que le canal d'alimentation est réalisé sous la forme d'une colonne d'alimentation (26).

13. Canal d'alimentation suivant la revendication 12, caractérisé en ce que la colonne d'alimentation (26) est agencée de manière à pouvoir tourner autour de son axe longitudinal.

14. Canal d'alimentation suivant la revendication 13, caractérisé en ce qu'une saillie en forme de calotte (29) du pied (30) pénètre dans une cuvette de support (31).

15. Canal d'alimentation suivant l'une des revendications 12 à 14 caractérisé en ce qu'un ressort de pression (33) agissant dans la direction longitudinale de la colonne d'alimentation (26) est disposé à l'intérieur du pied (30).
